# EUROPÄISCHE PATENTSCHRIFT

(11) **EP 4 092 340 B1**
(45) Veröffentlichungstag und Bekanntmachung des Hinweises auf die Patenterteilung: **29.10.2025**
(21) Anmeldenummer: 22166522.7
(22) Anmeldetag: 04.04.2022
(51) Int. Cl.: F24F 7/06, F24F 13/02, F24F 13/08, F15D 1/04

(54) **ROHRBOGEN FÜR EINEN ABLUFTKANAL EINER DUNSTABZUGSHAUBE**
PIPE BEND FOR AN EXHAUST DUCT OF AN EXHAUST HOOD
COUDE TUBULAIRE POUR UN CANAL D'AIR D'ÉVACUATION D'UNE HOTTE ASPIRANTE

(30) Priorität: 21.05.2021 DE 102021113249
(43) Veröffentlichungstag der Anmeldung: 23.11.2022
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- EP-A1- 1 788 259
- EP-A1- 2 281 138
- DE-A1- 10 343 892
- DE-C- 588 113
- FR-A- 1 107 453
- US-A1- 2017 273 425

## Beschreibung

Die Erfindung geht aus von einem Rohrbogen, insbesondere für einen Abluftkanal einer Dunstabzugshaube, welcher eine Umlenkung von 90°, aufweist, mit einer Einströmseite und einer Ausströmseite, wobei der Rohrbogen mindestens ein in Umlenkrichtung gekrümmtes Luftleitelement aufweist, das sich im Innern des Rohrbogens erstreckt, wobei der Rohrbogen in Strömungsrichtung hinter der Einströmseite, insbesondere angrenzend an diese, eine Querschnittsaufweitung und vor der Ausströmseite, insbesondere angrenzend an diese, eine Querschnittsverjüngung aufweist, wobei der der Bogenverlauf der Rohrbogenaußenwand im Wesentlichen dem eines Viertelkreises entspricht. Ein derartiger Rohrbogen ist bekannt aus der Druckschrift EP 2 281 138 A1. Weitere Rohrbögen sind außerdem bekannt aus den Druckschriften EP 1 788 259 A1, DE 103 43 892 A1, FR 1 107 453, DE 588, 113 C, US 2017 / 273 425 A1 oder DE 10 2016 220 527 A1.

Bei gattungsgemäßen Rohrbögen für Abluftkanäle von Dunstabzugshauben und dergleichen ist es grundsätzlich wünschenswert, den Druckverlust im Kanal so gering wie möglich zu halten. Bekanntermaßen ist der zu erwartende Druckverlust im Bereich von Richtungsänderungen des Kanals, das heißt insbesondere im Bereich der Rohrbögen, besonders groß, da aufgrund der Umlenkung des Luftstroms im Rohrbogen ein zumindest teilweise nicht laminarer Luftstrom aufgrund von sehr turbulenten Luftablösungen und damit einhergehenden Verwirbelungen im Rohrbogen eintritt. Die Luftablösungen und Verwirbelungen führen nicht nur zu einem Druckverlust sondern auch zu einer Geräuschentwicklung, die grundsätzlich unerwünscht und auf ein möglichst geringes Maß reduziert werden soll. Ein erster Ansatz diesen Problemen zu begegnen, ist die Verwendung von Luftleitelementen, wobei darüber hinaus der Wunsch fortbesteht, die erzielbaren Effekte hinsichtlich der Geräuschentwicklungs- sowie Druckverlustverringerung noch weiter zu verbessern.

Es ist daher die Aufgabe der Erfindung, einen Rohrbogen der eingangs beschriebenen Art derart weiterzuentwickeln, dass er eine möglichst geringe Geräuschentwicklung verursacht und im Übrigen einen möglichst geringen Druckverlust für durchströmende Fluide, insbesondere Luft und Wrasen, aufweist.

Diese Aufgabe wird durch einen Rohrbogen mit dem Merkmal des Anspruchs 1 gelöst. Vorteilhafte Ausführungsformen sind jeweils Gegenstand der abhängigen Ansprüche.

Demgemäß ist vorgesehen, dass der Bogenverlauf der Rohrbogenaußenwand eine außerhalb des Scheitelpunkts des Rohrbogens, in Strömungsrichtung hinter dem Scheitelpunkt liegende, zur Außenseite des Rohrbogens gerichtete Auswölbung aufweist, wobei die Auswölbung in Strömungsrichtung einen gegenüber dem Verlauf des Viertelkreises zunächst flachen Anstieg bis zu einem Scheitelpunkt der Auswölbung und hinter dem Scheitelpunkt der Auswölbung einen im Vergleich zum Anstieg steileren Abfall auf das Niveau des Viertelkreises aufweist.

Zur Optimierung des Luftflusses ist eine Seite des Rohrbogens als Einströmseite und die andere Seite als Ausströmseite festgelegt, da eine Durchflussoptimierung eine asymmetrische Ausgestaltung des Rohrbogens erfordert. Ferner ist vorgesehen, dass zur Minimierung des Druckverlustes der Rohrbogen zur Erweiterung des Strömungsquerschnittes im Bereich der Luftleitelemente einen gegenüber den Anschlussquerschnitten größeren Querschnitt aufweist. Die hierzu vorgesehene Querschnittsaufweitung kann sich unmittelbar an den einströmseitigen Anschlussquerschnitt anschließen. Die Anschlussbereiche können in Form von Anschlussmuffen ausgebildet sein. Die Querschnittsaufweitung kann sich über eine kurze Distanz, insbesondere außerhalb des Umlenkbereichs des Rohrbogens erstrecken. Die Aufweitung des Strömungsquerschnitts bewirkt vorteilhaft eine Reduzierung von Wandreibungsverlusten und somit eine Reduzierung des Druckverlustes in der Strömung. Ferner bewirkt die Aufweitung eine Reduzierung der Strömungsgeschwindigkeit im Bogen und somit eine Reduzierung der Trägheitskräfte in der Strömung. Die vorgesehene Querschnittsverjüngung kann in Strömungsrichtung unmittelbar vor dem ausströmseitigen Anschlussquerschnitt anschließen. Die Querschnittsverjüngung kann sich über eine kurze Distanz, insbesondere außerhalb des Umlenkbereichs des Rohrbogens erstrecken.

Die Auswölbung hat den Zweck, einen bionischen Verlauf des Volumenstroms zu ermöglichen. Die hierzu von einem Viertelkreis abweichende Rohrbogenaußenwand sorgt dabei im Außenbereich des Rohrbogens für einen zunächst gleichbleibenden Abstand zwischen dem äußersten Luftleitelement, wobei der Abstand sich hinter dem Scheitelpunkt des Rohrbogens vergrößert. Dies ist insbesondere auch in Wechselwirkung mit einem mehrteiligen außenliegenden Luftleitelement vorteilhaft. Dadurch nähert sich die Strömung einem bionischen Verlauf an, wodurch der Strömungsverlauf des Rohrbogens verbessert wird. Der bionische Verlauf der Wandkontur ist dabei an das Mäandern eines Flussbettes angelehnt, zur Erzielung geringer Druckunterschiede über den Querschnitt. Die nicht kreisförmige Kontur bewirkt dabei eine Vermeidung von lokal hohen Strömungsgeschwindigkeiten.

Es kann vorgesehen sein, dass der Radius der Rohrbogeninnenwand dem Verlauf eines Viertelkreises entspricht. Damit kann der Rohrbogen gegenüber der bionischen Rohrbogenaußenwand eine gewöhnliche Rohrbogeninnenwand in Form eines Viertelkreises aufweisen.

Es kann vorgesehen sein, dass die Querschnittsfläche des Rohrbogens über den gesamten Bogenverlauf größer als der Einströmquerschnitt und der Ausströmquerschnitt des Rohrbogens ist. Dadurch wird in vorteilhafter Weise erreicht, dass an keiner Stelle des Rohrbogens ein unerwünschter Druckverlust auftritt. Bei Ausgestaltungen, welche eine Querschnittsänderung zwischen Einströmseite und Auströmseite vorsehen, wie beispielsweise von einem Flachkanal auf einen Rundkanal, kann vorgesehen sein, dass die Querschnittsfläche beider unterschiedlicher Querschnittsformen im Wesentlichen gleich bleibt, wobei der dazwischenliegende Rohrbogenabschnitt durchgängig eine demgegenüber größere Querschnittsfläche aufweist.

Es kann vorgesehen sein, dass das mindestens eine Luftleitelement stirnseitig an der Einströmseite des Rohrbogens eine konkave Abschlusskante aufweist. Durch diese konkave Leitkörperform an der Einlaufseite der Luftleitelemente wird einströmseitig eine optimale Strömungsführung erzielt. Die konkave Krümmung kann dadurch realisiert sein, dass die Mitte der Abschlusskante gegenüber den an den Wandinnenseiten anliegenden Abschlusskantenrändern weiter in den Rohrbogen hineinragt bzw. in diesen zurückgezogen ist. Dadurch wird die Strömung von der Wand weggedrängt, um die Wandreibung zu reduzieren.

Es kann vorgesehen sein, dass die stirnseitige Abschlusskante des mindestens einen Luftleitelements an der Einströmseite des Rohrbogens im Bereich der gegenüberliegenden Wandbereiche bis in den Einströmquerschnitt hineinragt. Hierzu können die Außenbereiche der Abschlusskante zackenartig in die Anschlussmuffe hineinragen. Dadurch wird die Strömung vor der Umlenkung im Bogen frühzeitig erfasst. Ferner können die Leitkörpervorderkanten für eine tangentiale Anströmung optimiert sein, um Stoßverluste zu vermeiden.

Es kann vorgesehen sein, dass das mindestens eine Luftleitelement stirnseitig an der Ausströmseite des Rohrbogens eine konvexe Abschlusskante aufweist. Durch diese konvexe Leitkörperform an der Auslaufseite der Luftleitelemente wird ausströmseitig eine optimale Strömungsführung erzielt. Die konvexe Krümmung kann dadurch realisiert sein, dass die Mitte der Abschlusskante gegenüber den an den Wandinnenseiten anliegenden Abschlusskantenrändern weiter in die Anschlussmuffe hineinragt.

Es kann vorgesehen sein, dass ein mittlerer Bereich der stirnseitigen Abschlusskante des mindestens einen Luftleitelements an der Ausströmseite des Rohrbogens in den Ausströmquerschnitt hineinragt. Die Leitkörperhinterkanten können somit zur Kanalmitte hin verlängert sein, um eine vollständige Strömungsumlenkung vor Eintritt in den geraden Luftkanal zu erreichen.

Es kann vorgesehen sein, dass das mindestens eine Luftleitelement stirnseitig an einer Ausströmseite des Rohrbogens eine kammartig bzw. sägezahnförmig gezackte Abschlusskante aufweist. Es hat sich herausgestellt, dass durch die gezackte Abschlusskante eine besonders geräuscharme Strömung realisiert werden kann. Die Zacken können beispielsweise scharfkantig ausgeführt oder wellenförmig ausgeführt sein. Es ist ferner denkbar, dass die ausströmseitige Abschlusskante sowohl konvex geformt ist als auch kammartig gezackt ist.

Es kann vorgesehen sein, dass das mindestens eine Luftleitelement auf seiner Oberfläche zumindest eine senkrecht und/oder parallel zur Strömungsrichtung angeordnete Stolperkante bzw. ein sogenanntes Tripwire aufweist. Es können ferner eine Mehrzahl Stolperkanten senkrecht zur Strömungsrichtung hintereinander oder eine Mehrzahl Stolperkanten parallel zur Strömungsrichtung nebeneinander auf der Luftleitelementoberfläche angeordnet sein. Darüber hinaus ist denkbar, dass die Stolperkanten gitterartig auf der Luftleitelementoberfläche angeordnet sind. Die Stolperkanten können auf einer der Luftleitelementseiten oder auf beiden Seiten angeordnet sein. Insbesondere ist denkbar, dass die Stolperkanten auf den Saugseiten der Leitkörper angeordnet sind, um eine turbulente Grenzschicht herbeizuführen, um eine Strömungsablösung zu vermeiden und eine verlustfrei Umlenkung zu erreichen. Insbesondere kann vorgesehen sein, dass bei den Leitkörpern mit kleineren Radien, also den innen liegenden Leitkörpern, eine Stolperkante in Strömungsrichtung gesehen im vorderen Bereich angeordnet ist. Insbesondere kann ferner vorgesehen sein, dass bei den Leitkörpern mit größeren Radien, also den außen liegenden Leitkörpern, eine in Strömungsrichtung gesehen Stolperkante im hinteren Bereich angeordnet ist.

Es kann vorgesehen sein, dass das Luftleitelement mehrteilig ist, wobei ein erstes und ein zweites Teilelement des Luftleitelements in einer Radialrichtung des Rohrbogens einen Versatz zueinander aufweisen.

Die gekrümmten Luftleitelemente können insbesondere zweiteilig ausgebildet sein. Alternativ können sie jedoch auch dreiteilig oder aus noch mehr Teilen ausgebildet sein. Beispielsweise können die Luftleitelemente aus einer Vielzahl Luftleitelemente Teilelementen gebildet sein, wobei die Teilelemente jeweils gerade ausgebildet sind und jeweils einen Versatz zum angrenzenden Luftleitelement aufweisen, wobei die so im Rohrbogen angeordneten Teilelemente einen Kreisbogen definieren. Dabei können die benachbarten Teilelemente jeweils um eine entsprechende Winkelgradzahl zueinander verdreht sein. Bei der zweiteiligen Ausführung sind die Luftleitelemente vorzugsweise auf halber Länge in Erstreckungsrichtung zwischen den gegenüber liegenden Anschlussquerschnitten des Rohrbogens geteilt, beispielsweise an einem Scheitelpunkt des Luftleitelements.

Bei einer Ausführungsform können die Teilelemente in einem Überlappungsbereich einander zugewandter Enden der Teilelemente miteinander überlappen. Dabei kann vorgesehen sein, dass die beiden Teilelemente in dem Überlappungsbereich gerade um einen Versatz voreinander beabstandet sind. In dem Überlappungsbereich können sie sich vorzugsweise parallel erstrecken.

Bei einer alternativen Ausführungsform können die Teilelemente mit ihren Stirnseiten einander zugewandter Enden der Teilelemente fluchten. Dabei müssen sie sich vorzugsweise nicht exakt gegenüberstehen. Es kann vielmehr lediglich vorgesehen sein, dass die Teilelemente mit ihren Stirnseiten in der Radialrichtung ihrer Krümmung fluchten.

Wenn der Rohrbogen mehrere gekrümmte Luftleitelemente aufweist, kann vorgesehen sein, dass ein erstes gekrümmtes Luftleitelement in einem Überlappungsbereich überlappende Teilelemente der zuvor beschriebenen Art aufweist, während ein zweites gekrümmtes Luftleitelement mit ihren Stirnseiten einander zugewandte Teilelemente aufweist, die mit ihren Stirnseiten in der Radialrichtung der Krümmung fluchten. Beispielsweise kann das gekrümmte Luftleitelement mit den überlappenden Teilelementen ein äußeres gekrümmtes Luftleitelement sein, während das gekrümmte Luftleitelement mit den fluchtenden Stirnseiten ein inneres gekrümmtes Luftleitelement ist, welches näher an einem Innenradius des Rohrbogens im Vergleich zu dem äußeren gekrümmten Luftleitelement angeordnet ist, mithin einen geringeren Krümmungsradius als das äußere Luftleitelement aufweist.

Wenn das Luftleitelement zweiteilig ausgeführt ist, kann insbesondere vorgesehen sein, dass das erste und das zweite Teilelement den Versatz zueinander an einem Scheitelpunkt des Luftleitelements aufweisen.

Es hat sich herausgestellt, dass durch die Beabstandung der Teilelemente in Radialrichtung der Krümmung des Luftleitelements zu einer Verringerung der Strömungsablösung und damit zu einer Unterdrückung der Ausbildung von Turbulenzen im Rohrbogen führt, wodurch letztlich der Druckverlust und die Geräuschentwicklung des Rohrbogens gegenüber den aus dem Stand der Technik bekannten Rohrbögen herabgesetzt werden.

Es kann vorgesehen sein, dass der Rohrbogen eine Mehrzahl im Wesentlichen parallel nebeneinander im Rohrbogen angeordnete Luftleitelemente aufweist, wobei das der Rohrbogenaußenwand nächstliegende Luftleitelement mehrteilig ist, wobei ein erstes und ein zweites Teilelement des der Rohrbogenaußenwand nächstliegenden Luftleitelements in einer Radialrichtung des Rohrbogens einen Versatz zueinander aufweisen.

Die Ausführung des außenliegenden Luftleitelements mit zumindest zwei Teilelementen sorgt gerade im für eine Grenzschichtablösung anfälligen Randbereich des Rohrbogens zu einer Verringerung der Strömungsablösung.

Je nach Durchmesser des Rohrbogens kann es vorteilhaft sein, die Anzahl der nebeneinander angeordneten Luftleitelemente entsprechend anzupassen und entsprechend für größere Durchmesser eine größere Anzahl Luftleitelemente vorzusehen und umgekehrt.

Es kann vorgesehen sein, dass der Rohrbogen drei parallel nebeneinander im Rohrbogen angeordnete Luftleitelemente aufweist, wobei das mittlere und das innenliegende Luftleitelement jeweils einteilig ausgeführt sind.

Es kann vorgesehen sein, dass die Abstände der Luftleitelemente zur Rohrbogenaußenwand hin zunehmen, wobei der mittlere Abstand des äußeren Luftleitelements zum mittleren Luftleitelement um das 1,4-1,8-fache, bevorzugt um das 1,5-1,7-fache, besonders bevorzugt um das 1,6-fache größer ist als der Abstand des mittleren Luftleitelements zum inneren Luftleitelement.

Es kann vorgesehen sein, dass der Abstand des inneren Luftleitelements zur Rohrbogeninnenwand maximal 20 %, bevorzugt maximal 15 %, besonders bevorzugt maximal 9% des mittleren Rohrbogenradius beträgt. Es hat sich herausgestellt, dass insbesondere die Annäherung des inneren Leitkörpers an den Innenradius des Rohrbogens zu einer erheblichen Verbesserung des Strömungsverhaltens führt.

Es kann vorgesehen sein, dass der Rohrbogen an gegenüberliegenden Innenseiten beabstandete Führungsnuten zum seitlichen Einschieben und Fixieren der Luftleitelemente im Rohrbogen aufweist. Für jedes Luftleitelement beziehungsweise für jedes Teilelement kann dabei ein separates Paar im Rohrbogen gegenüberliegender und fluchtender Führungsnuten vorgesehen sein. Die Führungsnuten können so ausgelegt sein, dass die Luftleitelemente erst nach Überwindung einer Vorspannung in diese einschiebbar sind. Die Montage der Luftleitelemente kann abhängig von der Verbindungsart der Halbschalen sein. Beim Spiegelschweißen können die Luftleitelemente beispielsweise aufgrund des automatischen Prozesses und der Spiegeldicke durch eine angespritzte Führung am Luftleitelement einseitig in einer Halbschale vorzentriert und später thermisch verbunden werden.

Es kann vorgesehen sein, dass der Rohrbogen einen, insbesondere in Form eines Pfeils ausgebildeten, Montageindikator zum Anzeigen der Einbaurichtung auf der Außenseite des Rohrbogens aufweist. Dadurch kann einerseits die Montage vereinfacht und beschleunigt werden und andererseits auch nach Einbau des Rohrbogens besonders einfach die Strömungsrichtung erkannt werden.

Der Montageindikator kann als Vertiefung im Material des Rohrbogens oder als Materialanhäufung ausgebildet sein. Der Montageindikator kann auf einer Seite, der Ober- oder Unterseite oder einer Kombination daraus des Rohrbogens angeordnet sein.

Der Rohrbogen kann im Bereich der Einströmseite und/oder der Ausströmseite beidseitig und insbesondere mittig angeordnet Anbindungsstellen für d ein Verbindungselement aufweisen, über welches der Rohrbogen an benachbarte Rohrelemente anbindbar ist.

Es kann vorgesehen sein, dass der Rohrbogen als Flachkanalbogen oder als Übergangsbogen von einem rechteckigen Flachkanalanschluss auf einen Rundkanalanschluss, oder umgekehrt, ausgebildet ist.

Es kann vorgesehen sein, dass die zur Rohrbogeninnenwand gerichtete Fläche des Luftleitelements doppelt gekrümmt ist, mit einer entlang der Strömungsrichtung zumindest abschnittsweise verlaufenden ersten Wölbung und mit einer senkrecht zur Strömungsrichtung zumindest abschnittsweise verlaufenden zweiten Wölbung. Die Wölbungen können wahlweise beide konkav sein. Alternativ kann eine erste Wölbung in Strömungsrichtung entsprechend der Krümmung des Rohrbogens konkav und eine zweite Wölbung senkrecht zur Strömungsrichtung zur Rohrbogeninnenwand hin konvex sein, so dass das oder die Luftleitelemente hyperbolische Paraboloide darstellen.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. 1: eine Draufsicht auf eine Ausführungsform des erfindungsgemäßen Rohrbogens;
- Fig. 2: eine perspektivische Ansicht einer Ausführungsform des erfindungsgemäßen Rohrbogens;
- Fig. 3: eine perspektivische Ansicht einer weiteren Ausführungsform des erfindungsgemäßen Rohrbogens;
- Fig. 4: eine Draufsicht einer weiteren Ausführungsform des erfindungsgemäßen Rohrbogens;
- Fig. 5: eine explodierte Ansicht einer weiteren Ausführungsform des erfindungsgemäßen Rohrbogens.

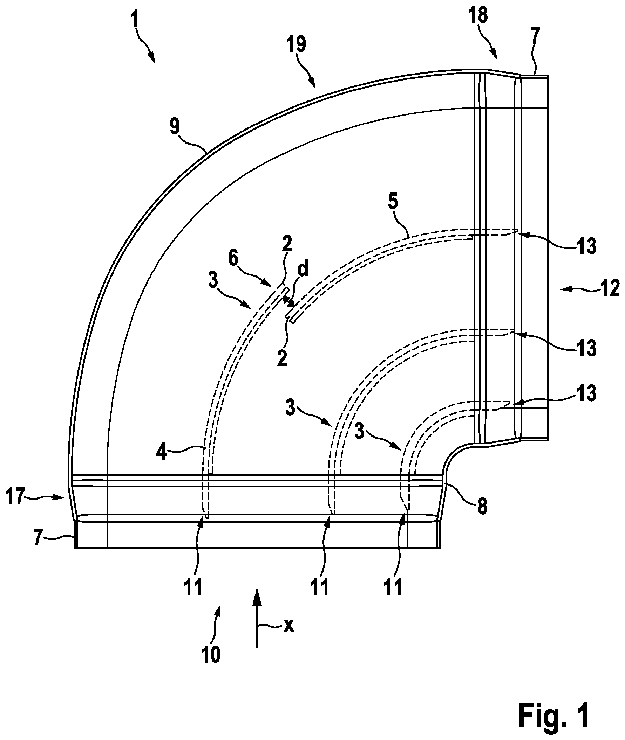

Figur 1 zeigt eine erste Ausführungsform eines erfindungsgemäßen Rohrbogens 1 in Form eines Flachkanals, welcher eine Umlenkung der abzuführenden Luft einer Dunstabzugshaube um 90° bewirkt. Der Rohrbogen 1 weist eine Einströmseite 10 sowie eine Ausströmseite 12 auf, durch welche die Strömungsrichtung x festgelegt ist.

Dadurch muss bei Montage des Bogens darauf geachtet werden, dass dieser in der korrekten Ausrichtung eingesetzt wird, so dass die Abluft durch die Einströmseite 10 ein- und durch die Ausströmseite 12 aus dem Rohrbogen herausströmt. In dem Rohrbogen 1 sind drei Luftleitelemente 3 angeordnet, wobei das der Rohrbogenaußenwand 9 am nächsten liegende Luftleitelement 3 aus zwei Teilelementen 4 und 5 besteht, welche in einem Überlappungsbereich 6 mit entgegengesetzten Enden 2 überlappen und einen Versatz d zueinander aufweisen. Das in Strömungsrichtung x hintere Teilelement 5 ist gegenüber dem vorderen Teilelement 4 näher in Richtung Rohrbogeninnenwand 8 angeordnet. Im Überlappungsbereich 6 verlaufen die Teilelementabschnitte 4, 5 äquidistant zueinander. Die Teilelemente 4, 5 verlaufen ferner jeweils äquidistant zum benachbarten mittleren Luftleitelement 3, welches wiederum äquidistant zum innersten Luftleitelement 3 verläuft. Die Luftleitelemente 3 beziehungsweise die Teilelemente 4, 5 weisen jeweils eine doppelte konkave Krümmung auf. Eine erste Krümmung folgt dem Verlauf des Rohrbogens 1 und eine zweite konkave Krümmung zeichnet sich durch eine Wölbung der Elemente um deren Ausdehnung in Strömungsrichtung x aus, so dass diese jeweils zur Rohrbogeninnenwand 8 hin konkav sind. Insbesondere ist zu erkennen, dass das innere Luftleitelement 3 eine größere zweite konkave Krümmung aufweist als das mittlere und das mittlere eine größere als jeweils die Teilelemente 4, 5 des äußeren Luftleitelements 3. Entsprechend kragt das innere Luftleitelement 3 weiter in Richtung Rohrbogenaußenwand 9 aus als das mittlere und das äußere und entsprechend das mittlere weiter als das äußere Luftleitelement 3. Diese unterschiedlich starken Krümmungen bewirken ein optimales Umlenken der Luft an jeder Stelle des Rohrbogens unter Berücksichtigung der unterschiedlich scharfen Krümmungsradien, an denen die unterschiedlichen Luftleitelemente 3 positioniert sind. Die Rohrbogenaußenwand weist im Bereich zwischen Scheitelpunkt des Rohrbogens 1 und der Ausströmseite 12 eine zur Außenseite des Rohrbogens 1 gerichtete Auswölbung 19 auf. Diese kann beispielsweise eindimensional ausgebildet sein, so dass über den Höhenverlauf des Rohrbogens 1 eine konstante Auswölbung 19 realisiert ist. Alternativ kann vorgesehen sein, dass die Auswölbung 19 blasenförmig ausgebildet ist, so dass deren größte Erhebung in oder in etwa im Höhenverlauf in der Mitte des Rohrbogens 1 vorgesehen ist, und demgegenüber die den Innenwänden 15 benachbarten Bereiche der Rohrbogenaußenwand 9 keine oder eine demgegenüber geringere Erhebung aufweisen.

In Strömungsrichtung x weist die Auswölbung 19 einen gegenüber dem Verlauf eines Viertelkreises zunächst flachen Anstieg bis zu einem Scheitelpunkt der Auswölbung 19 auf. Hinter dem Scheitelpunkt der Auswölbung 19 weist diese dann einen im Vergleich zum Anstieg steileren Abfall auf das Niveau des Viertelkreises auf. An der Einströmseite 10 sowie an der Ausströmseite 12 weist der Rohrbogen 1 in der dargestellten Ausführungsform Anschlussmuffen mit demselben Anschlussquerschnitt 7 auf. Es ist zu erkennen, dass alle Luftleitelemente 3 ungefähr bis an die Anschlussmuffen heranreichen Einströmseitig ist hinter der Anschlussmuffe eine Querschnittsaufweitung 17 vorgesehen, vor der Ausströmseite 12 grenzt eine Querschnittsverjüngung 18 an die ausströmseitige Anschlussmuffe an. Im Bereich zwischen den Anschlussmuffen weist der Rohrbogen 1 damit keine Stelle auf, an der dessen Querschnitt kleiner oder gleich dem Anschlussmuffenquerschnitt 7 ist.

Weiterhin ist zu sehen, dass die Abstände der Luftleitelemente 3 von der Rohrbogeninnenwand 8 zur Rohrbogenaußenwand 9 hin zunehmen. Das innere Luftleitelement 3 ist dabei sehr dicht an der Rohrbogeninnenwand angeordnet, ungefähr bei einem Zehntel der Rohrbogenbreite. Das äußere Luftleitelement 3 ist hingegen weit beabstandet von der Rohrbogenaußenwand 9 und in etwa im Bereich ½ bis 2/3 der Rohrbogenbreite angeordnet.

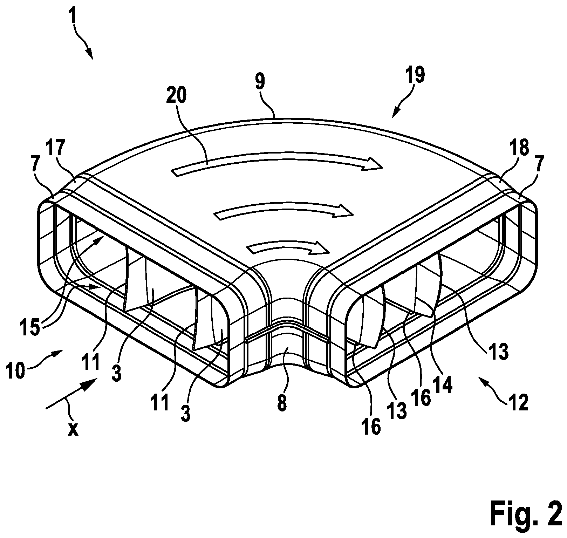

In Figur 2 ist eine weitere Ausführungsform des Rohrbogen 1 dargestellt, welche ebenfalls einströmseitig wie ausströmseitig Anschlussmuffen mit identischen Anschlussquerschnitten 7 aufweist, wobei sich an die Einströmseite 10 eine Querschnittsaufweitung 17 anschließt und unmittelbar vor der Ausströmseite 12 eine Querschnittsverjüngung 18 angeordnet ist. Auf der Oberseite des Rohrbogens 1 sind mehrere Montageindikatoren 20 angeordnet, welche in Form von Pfeilen realisiert sind. Diese zeigen einerseits einem Monteur die Einbaurichtung des Rohrbogens 1 an und andererseits nach Einbau die Strömungsrichtung x des Rohrbogens 1. Der Montageindikator kann wie dargestellt durch Materialausnehmungen realisiert sein, alternativ durch Materialaufdickungen. Ferner ist denkbar, dass dieser auf der Außenseite des Rohrbogens 1 farblich hervorgehoben ist. Insbesondere ist in der dargestellten Perspektive zu erkennen, dass die Lufteitelemente 3 einströmseitig konkave Abschlusskanten 11 aufweisen, so dass die mittlere Höhe der Luftleitelemente 3 gegenüber den an den Rohrbogeninnenseiten 15 liegenden Außenkanten in Strömungsrichtung x in den Rohrbogen 1 hineinragt. Ausströmseitig sind die Abschlusskanten 13 der Luftleitelemente 3 hingegen konvex geformt, so dass die mittlere Höhe der Luftleitelemente 3 gegenüber den an den Rohrbogeninnenseiten 15 liegenden Außenkanten in Strömungsrichtung x aus dem Rohrbogen 1 herausragt. Das der Rohrbogeninnenwand 8 am nächsten liegende Luftleitelement 3 ist in der dargestellten Perspektive nicht zu sehen, weist aber ebenso einerseits konkave und andererseits konvexe Abschlusskanten 11, 13 auf. Die Luftleitelemente 3 sind jeweils über Führungsnuten 16 im Rohrbogen fixiert. Nicht dargestellt ist, dass die einem Luftleitelement 3 zugeordneten Führungsnuten 16 an beiden gegenüberlegenden Innenseiten 15 des Rohrbogens 1 ausgebildet sind und miteinander fluchten. Die Luftleitelemente 3 können entweder seitlich in diese eingeschoben werden oder vor dem Zusammensetzen der Halbschalen des Rohrbogens 1 senkrecht in diese eingesteckt werden. Die Luftleitelemente weisen ferner Stolperkanten 14, bzw. Tripwires, auf, welche in der dargestellten Ausführungsform gitterförmig auf den Luftleitelementen 3 angeordnet sind und zu einer Verbesserung des Luftflusses im Rohrbogen 1 beitragen. Die Stolperkanten können stufenartige Materialaufdickungen sein, welche an die Luftleitelemente 3 angeformt sind.

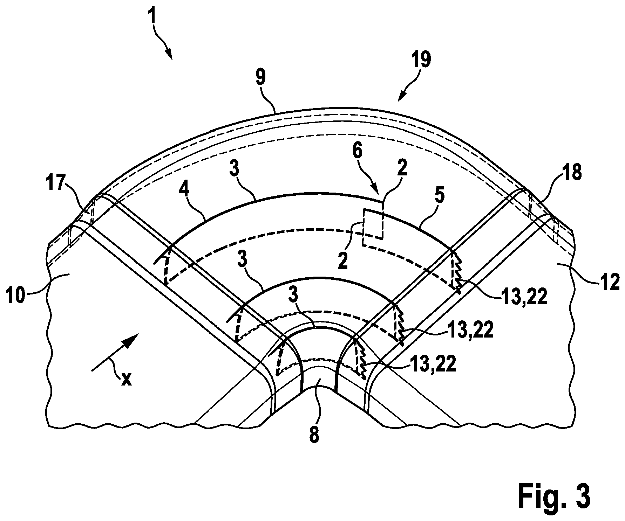

Figur 3 zeigt eine weitere Ausführungsform des Rohrbogens 1 im bereits eingebauten Zustand. Dieser weist ebenfalls insbesondere die Auswölbung 19 und drei äquidistant verlaufende Luftleitelemente 3 auf, von denen das der Rohrbogenaußenwand 9 am nächsten liegende in zwei Teilelemente 4, 5 unterteilt ist. Insbesondere ist zu erkennen, dass die ausströmseitigen Abschlusskanten 13 der Luftleitelemente 3 kammartig gezackte Enden 22 aufweisen, welche dem Verlauf von Eulenflügeln nachempfunden sind und für eine möglichst leise Luftführung durch eine Schallreduzierung selbst bei unterschiedlichen Strömungsgeschwindigkeiten sorgen.

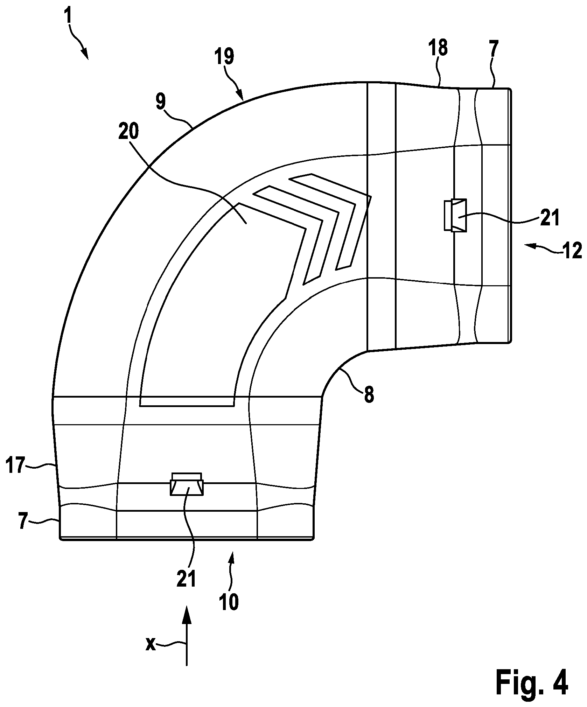

In Figur 4 ist eine weitere Ausführungsform des erfindungsgemäßen Rohrbogens 1 dargestellt. Diese weist insbesondere Anbindungsstellen 21 in Form von hinterschnittigen Rastelementen auf, welche einströmseitig und ausströmseitig auf den Außenseiten, oben und unten, des Rohrbogens 1 angeordnet sind und über welche Anschlusselemente mit dem Rohrbogen 1 verbindbar sind. Der Montageindikator 20 ist in der gezeigten Ausführungsform durch einen breiten Pfeil realisiert an dessen Spitze sich jeweils beabstandet weitere Pfeile in Strömungsrichtung anschließen.

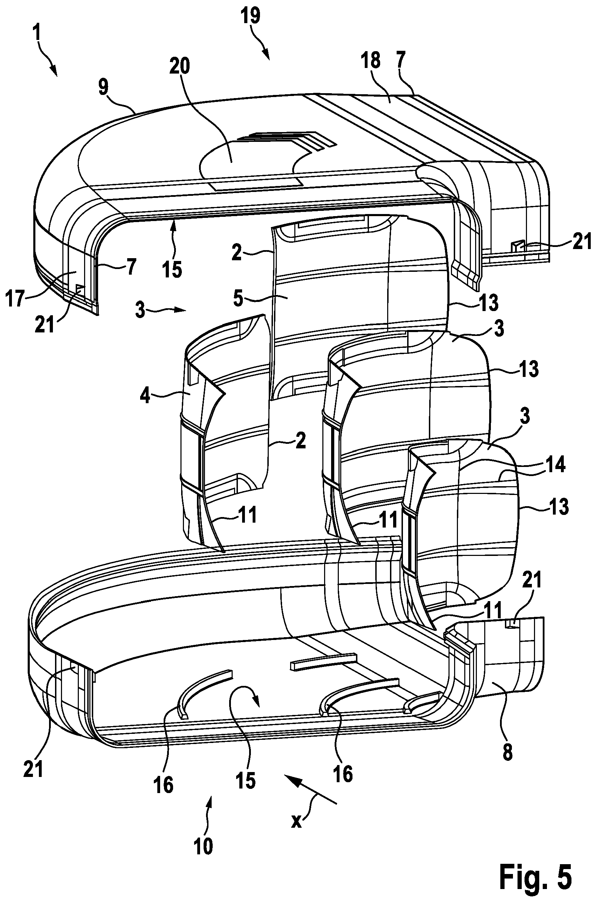

Figur 5 zeigt schließlich eine Ausführungsform des Rohrbogens 1 in explodierter Darstellung. Dieser weist eine Unterschale und eine Oberschale auf, welche über an den Kontaktstellen angeordnete Rastverbindungen lösbar miteinander verbindbar sind. Die Schalen trennen den Rohrbogen 1 parallel zur Umlenkebene. Zwischen den Schalen aufgenommen sind die Luftleitelemente 3 bzw. deren Teilelemente 4, 5, welche in Führungsnuten 16 an Innenseiten 15 der Oberschale und der Unterschale des Rohrbogens 1 fixierbar sind. Im Gegensatz zur Ausführungsform aus Figur 4 sind die Anbindungsstellen 21 nun auf den Seiten des Rohrbogens 1 angeordnet.

### Bezugszeichenliste

- 1: Rohrbogen
- 2: Ende
- 3: Luftleitelement
- 4: erstes Teilelement
- 5: zweites Teilelement
- 6: Überlappungsbereich
- 7: Anschlussquerschnitt
- 8: Rohrbogeninnenwand
- 9: Rohrbogenaußenwand
- 10: Einströmseite
- 11: konkave Abschlusskante
- 12: Ausströmseite
- 13: konvexe Abschlusskante
- 14: Stolperkante
- 15: Innenseiten
- 16: Führungsnuten
- 17: Querschnittsaufweitung
- 18: Querschnittsverjüngung
- 19: Auswölbung
- 20: Montageindikator
- 21: Anbindungsstellen
- 22: kammartig gezacktes Ende
- x: Strömungsrichtung
- d: Versatz

## Patentansprüche

1. Rohrbogen (1), insbesondere für einen Abluftkanal einer Dunstabzugshaube, welcher eine Umlenkung von 90° aufweist, mit einer Einströmseite (10) und einer Ausströmseite (12), wobei der Rohrbogen (1) mindestens ein in Umlenkrichtung gekrümmtes Luftleitelement (3) aufweist, das sich im Innern des Rohrbogens (1) erstreckt, wobei der Rohrbogen (1) in Strömungsrichtung (x) hinter der Einströmseite (10), insbesondere angrenzend an diese, eine Querschnittsaufweitung (17) und vor der Ausströmseite (12), insbesondere angrenzend an diese, eine Querschnittsverjüngung (18) aufweist, wobei der Bogenverlauf der Rohrbogenaußenwand (9) im Wesentlichen dem eines Viertelkreises entspricht, **dadurch gekennzeichnet, dass** der Bogenverlauf der Rohrbogenaußenwand (9) eine außerhalb des Scheitelpunkts des Rohrbogens (1) in Strömungsrichtung (x) hinter dem Scheitelpunkt liegende, zur Außenseite des Rohrbogens (1) gerichtete Auswölbung (19) aufweist, wobei die Auswölbung (19) in Strömungsrichtung (x) einen gegenüber dem Verlauf des Viertelkreises zunächst flachen Anstieg bis zu einem Scheitelpunkt der Auswölbung (19) und hinter dem Scheitelpunkt der Auswölbung (19) einen im Vergleich zum Anstieg steileren Abfall auf das Niveau des Viertelkreises aufweist.

2. Rohrbogen (1) nach Anspruch 1, wobei der Radius der Rohrbogeninnenwand (8) dem Verlauf eines Viertelkreises entspricht.

3. Rohrbogen (1) nach Anspruch 1 oder 2, dessen Querschnittsfläche über den gesamten Bogenverlauf größer als der Einströmquerschnitt und der Ausströmquerschnitt des Rohrbogens (1) ist.

4. Rohrbogen (1) nach einem der vorangehenden Ansprüche, bei dem das mindestens eine Luftleitelement (3) stirnseitig an der Einströmseite (10) des Rohrbogens (1) eine konkave Abschlusskante (11) aufweist.

5. Rohrbogen (1) nach Anspruch 4, bei dem die stirnseitige Abschlusskante (11) des mindestens einen Luftleitelements (3) an der Einströmseite (10) des Rohrbogens (1) im Bereich der gegenüberliegenden Wandbereiche bis in den Einströmquerschnitt hineinragt.

6. Rohrbogen (1) nach einem der vorangehenden Ansprüche, bei dem das mindestens eine Luftleitelement (3) stirnseitig an der Ausströmseite (12) des Rohrbogens (1) eine konvexe Abschlusskante (13) aufweist.

7. Rohrbogen (1) nach Anspruch 6, bei dem ein mittlerer Bereich der stirnseitigen Abschlusskante (13) des mindestens einen Luftleitelements (3) an der Ausströmseite (12) des Rohrbogens (1) in den Ausströmquerschnitt hineinragt.

8. Rohrbogen (1) nach einem der vorangehenden Ansprüche, bei dem das mindestens eine Luftleitelement (3) stirnseitig an einer Ausströmseite (12) des Rohrbogens (1) eine kammartig gezackte Abschlusskante (22) aufweist.

9. Rohrbogen (1) nach einem der vorangehenden Ansprüche, bei dem das mindestens eine Luftleitelement (3) auf seiner Oberfläche zumindest eine senkrecht und/oder parallel zur Strömungsrichtung angeordnete Stolperkante (14) aufweist.

10. Rohrbogen (1) nach einem der vorangehenden Ansprüche, wobei das Luftleitelement (3) mehrteilig ist, wobei ein erstes und ein zweites Teilelement (4, 5) des Luftleitelements (3) in einer Radialrichtung (R) des Rohrbogens (1) einen Versatz (d) zueinander aufweisen.

11. Rohrbogen (1) nach einem der vorangegangenen Ansprüche, welcher eine Mehrzahl im Wesentlichen parallel nebeneinander im Rohrbogen (1) angeordnete Luftleitelemente (3) aufweist, wobei das der Rohrbogenaußenwand (9) nächstliegende Luftleitelement (3) mehrteilig ist, wobei ein erstes und ein zweites Teilelement (4, 5) des der Rohrbogenaußenwand (9) nächstliegenden Luftleitelements (3) in einer Radialrichtung (R) des Rohrbogens (1) einen Versatz (d) zueinander aufweisen.

12. Rohrbogen nach Anspruch 11, welcher drei parallel nebeneinander im Rohrbogen angeordnete Luftleitelemente (3) aufweist, wobei das mittlere und das innen liegende Luftleitelement (3) jeweils einteilig ausgeführt sind.

13. Rohrbogen nach Anspruch 12, wobei die Abstände der Luftleitelemente (3) zur Rohrbogenaußenwand (9) hin zunehmen, wobei der mittlere Abstand des äußeren Luftleitelements (3) zum mittleren Luftleitelement (3) um das 1,4-1,8-fache, bevorzugt um das 1,5-1,7-fache, besonders bevorzugt um das 1,6-fache größer ist als der Abstand des mittleren Luftleitelements (3) zum inneren Luftleitelement (3).

14. Rohrbogen (1) nach einem der Ansprüche 11 bis 13, wobei der Abstand des inneren Luftleitelements (3) zur Rohrbogeninnenwand (8) maximal 20 %, bevorzugt maximal 15 %, besonders bevorzugt maximal 9% des mittleren Rohrbogenradius beträgt.

15. Rohrbogen (1) nach einem der vorangehenden Ansprüche, welcher an gegenüberliegenden Innenseiten (15) beabstandete Führungsnuten (16) zum seitlichen Einschieben und Fixieren der Luftleitelemente im Rohrbogen (1) aufweist.

16. Rohrbogen (1) nach einem der vorangehenden Ansprüche, welcher einen, insbesondere in Form eines Pfeils ausgebildeten, Montageindikator (20) zum Anzeigen der Einbaurichtung auf der Außenseite des Rohrbogens (1) aufweist.

17. Rohrbogen (1) nach einem der vorangegangenen Ansprüche, der als Flachkanalbogen oder als Übergangsbogen von einem rechteckigen Flachkanalanschluss auf einen Rundkanalanschluss, oder umgekehrt, ausgebildet ist.

## Claims

1. Pipe bend (1), in particular for an exhaust air duct of an extractor hood, which has a deflection of 90°, with an inflow side (10) and an outflow side (12), wherein the pipe bend (1) has at least one air guiding element (3) which is curved in the deflection direction and extends in the interior of the pipe bend (1), wherein the pipe bend (1) has a cross-sectional widening (17) behind the inflow side (10), in particular adjacent thereto, in the flow direction (x), and a cross-sectional narrowing (18) in front of the outflow side (12), in particular adjacent thereto, wherein the arc profile of the outer wall (9) of the pipe bend substantially corresponds to that of a quarter circle, **characterized in that** the arc profile of the outer wall (9) of the pipe bend has a bulge (19) which lies outside the vertex of the pipe bend (1) behind the vertex in the flow direction (x) and is directed towards the outer side of the pipe bend (1), wherein the bulge (19) in the flow direction (x) has an initially shallow increase with respect to the profile of the quarter circle as far as a vertex of the bulge (19) and, behind the vertex of the bulge (19), has a steeper drop to the level of the quarter circle in comparison with the increase.

2. Pipe bend (1) according to claim 1, wherein the radius of the inner wall (8) of the pipe bend corresponds to the profile of a quarter circle.

3. Pipe bend (1) according to claim 1 or 2, the cross-sectional area of which is greater than the inflow cross section and the outflow cross section of the pipe bend (1) over the entire arc profile.

4. Pipe bend (1) according to one of the preceding claims, in which the at least one air guiding element (3) has a concave end edge (11) on the end side on the inflow side (10) of the pipe bend (1).

5. Pipe bend (1) according to claim 4, in which the end edge (11) on the end side of the at least one air guiding element (3) on the inflow side (10) of the pipe bend (1) projects into the inflow cross section in the region of the opposite wall regions.

6. Pipe bend (1) according to one of the preceding claims, in which the at least one air guiding element (3) has a convex end edge (13) on the end side on the outflow side (12) of the pipe bend (1).

7. Pipe bend (1) according to claim 6, in which a central region of the end edge (13) on the end side of the at least one air guiding element (3) on the outflow side (12) of the pipe bend (1) projects into the outflow cross section.

8. Pipe bend (1) according to one of the preceding claims, in which the at least one air guiding element (3) has a comb-like serrated end edge (22) on the end side on an outflow side (12) of the pipe bend (1).

9. Pipe bend (1) according to one of the preceding claims, in which the at least one air guiding element (3) has on its surface at least one tripping edge (14) arranged perpendicularly and/or parallel to the flow direction.

10. Pipe bend (1) according to one of the preceding claims, wherein the air guiding element (3) is of multi-part design, wherein a first and a second sub-element (4, 5) of the air guiding element (3) have an offset (d) with respect to one another in a radial direction (R) of the pipe bend (1).

11. Pipe bend (1) according to one of the preceding claims, which has a plurality of air guiding elements (3) arranged substantially parallel next to one another in the pipe bend (1), wherein the air guiding element (3) closest to the outer wall (9) of the pipe bend is of multi-part design, wherein a first and a second sub-element (4, 5) of the air guiding element (3) closest to the outer wall (9) of the pipe bend have an offset (d) with respect to one another in a radial direction (R) of the pipe bend (1).

12. Pipe bend according to claim 11, which has three air guiding elements (3) arranged parallel next to one another in the pipe bend, wherein the central and the inner air guiding element (3) are each designed in one piece.

13. Pipe bend according to claim 12, wherein the distances of the air guiding elements (3) increase towards the outer wall (9) of the pipe bend, wherein the mean distance of the outer air guiding element (3) from the central air guiding element (3) is 1.4-1.8 times, preferably 1.5-1.7 times, particularly preferably 1.6 times greater than the distance of the central air guiding element (3) from the inner air guiding element (3).

14. Pipe bend (1) according to one of claims 11 to 13, wherein the distance of the inner air guiding element (3) from the inner wall (8) of the pipe bend is at most 20%, preferably at most 15%, particularly preferably at most 9% of the mean radius of the pipe bend.

15. Pipe bend (1) according to one of the preceding claims, which has spaced-apart guide grooves (16) on opposite inner sides (15) for the lateral insertion and fixing of the air guiding elements in the pipe bend (1).

16. Pipe bend (1) according to one of the preceding claims, which has an assembly indicator (20), designed in particular in the form of an arrow, for indicating the installation direction on the outer side of the pipe bend (1).

17. Pipe bend (1) according to one of the preceding claims, which is designed as a flat channel bend or as a transition bend from a rectangular flat channel connection to a round channel connection, or vice versa.

## Revendications

1. Coude (1), en particulier pour un conduit d'évacuation d'air d'une hotte aspirante, qui présente une déflexion de 90°, avec un côté d'entrée (10) et un côté de sortie (12), le coude (1) présentant au moins un élément de guidage d'air (3) courbé dans le sens de la déflexion, qui s'étend à l'intérieur du coude (1), le coude (1) présentant, dans le sens d'écoulement (x), derrière le côté d'entrée (10), en particulier à proximité de celui-ci, un élargissement de section (17) et, devant le côté de sortie (12), en particulier à proximité de celui-ci, un rétrécissement de section (18), la courbure de la paroi extérieure (9) du coude correspondant essentiellement à celle d'un quart de cercle et
**caractérisé en ce que** la courbure de la paroi extérieure (9) du coude présente un renflement (19) dirigé vers l'extérieur du sommet du coude (1), dans le sens d'écoulement (x) derrière le sommet, dirigé vers l'extérieur du coude (1), le renflement (19) présentant, dans le sens d'écoulement (x), une montée d'abord plate par rapport au tracé du quart de cercle jusqu'à un sommet du renflement (19) et, derrière le sommet du renflement (19), une descente plus raide par rapport à la montée jusqu'au niveau du quart de cercle.

2. Coude (1) selon la revendication 1, le rayon de la paroi intérieure (8) du coude correspondant au tracé d'un quart de cercle.

3. Coude (1) selon la revendication 1 ou 2, dont la section transversale sur toute la courbure du coude est supérieure à la section transversale d'entrée et à la section transversale de sortie du coude (1).

4. Coude (1) selon l'une des revendications précédentes, dans lequel le ou les éléments de guidage d'air (3) présentent un bord d'extrémité concave (11) sur le côté frontal du côté d'entrée (10) du coude (1).

5. Coude (1) selon la revendication 4, dans lequel le bord d'extrémité frontal (11) d'au moins un élément de guidage d'air (3) sur le côté d'entrée (10) du coude (1) s'étend dans la zone des parois opposées jusqu'à la section transversale d'entrée.

6. Coude (1) selon l'une des revendications précédentes, dans lequel au moins un élément de guidage d'air (3) présente, sur le côté frontal du côté de sortie (12) du coude (1), un bord d'extrémité convexe (13).

7. Coude (1) selon la revendication 6, dans lequel une zone centrale du bord d'extrémité frontal (13) d'au moins un élément de guidage d'air (3) sur le côté de sortie (12) du coude (1) s'étend dans la section transversale de sortie.

8. Coude (1) selon l'une des revendications précédentes, dans lequel au moins un élément de guidage d'air (3) présente, sur le côté frontal d'un côté de sortie (12) du coude (1), un bord d'extrémité dentelé en forme de peigne (22).

9. Coude (1) selon l'une des revendications précédentes, dans lequel le ou les éléments de guidage d'air (3) présentent sur leur surface au moins un bord d'arrêt (14) agencé perpendiculairement et/ou parallèlement à la direction d'écoulement.

10. Coude (1) selon l'une des revendications précédentes, l'élément de guidage d'air (3) étant en plusieurs parties, un premier et un deuxième éléments partiels (4, 5) de l'élément de guidage d'air (3) présentant un décalage (d) l'un par rapport à l'autre dans une direction radiale (R) du coude (1).

11. Coude (1) selon l'une des revendications précédentes, qui comporte une pluralité d'éléments de guidage d'air (3) agencés essentiellement parallèlement les uns à côté des autres dans le coude (1), l'élément de guidage d'air (3) le plus proche de la paroi extérieure (9) du coude étant en plusieurs parties, un premier et un deuxième éléments partiels (4, 5) de l'élément de guidage d'air (3) le plus proche de la paroi extérieure (9) du coude présentant un décalage (d) l'un par rapport à l'autre dans une direction radiale (R) du coude (1).

12. Coude selon la revendication 11, qui comporte trois éléments de guidage d'air (3) agencés parallèlement les uns à côté des autres dans le coude, les éléments de guidage d'air central et intérieur (3) étant chacun réalisés en une seule partie.

13. Coude selon la revendication 12, les distances entre les éléments de guidage d'air (3) et la paroi extérieure (9) du coude augmentant, la distance moyenne entre l'élément de guidage d'air extérieur (3) et l'élément de guidage d'air central (3) étant supérieure de 1,4 à 1,8 fois, de préférence de 1,5 à 1,7 fois et, de préférence, en particulier, de 1,6 fois, à la distance entre l'élément de guidage d'air central (3) et l'élément de guidage d'air intérieur (3).

14. Coude (1) selon l'une des revendications 11 à 13, la distance entre l'élément de guidage d'air intérieur (3) et la paroi intérieure du coude (8) étant au maximum de 20 %, de préférence au maximum de 15 %, de préférence au maximum de 9 % du rayon moyen du coude.

15. Coude (1) selon l'une des revendications précédentes, qui présente, sur des faces intérieures opposées (15), des rainures de guidage (16) espacées pour l'insertion latérale et la fixation des éléments de guidage d'air dans le coude (1).

16. Coude (1) selon l'une des revendications précédentes, qui présente un indicateur de montage (20), notamment en forme de flèche, pour indiquer le sens de montage sur la face extérieure du coude (1).

17. Coude (1) selon l'une des revendications précédentes, qui est conçu comme un coude à canal plat ou comme un coude de transition d'un raccord de canal plat rectangulaire à un raccord de canal arrondi, ou inversement.
